# EUROPÄISCHE PATENTSCHRIFT

(11) **EP 2 460 600 B1**
(45) Veröffentlichungstag und Bekanntmachung des Hinweises auf die Patenterteilung: **18.04.2018**
(21) Anmeldenummer: 11180583.4
(22) Anmeldetag: 08.09.2011
(51) Int. Cl.: B21J 15/32, B23P 19/00

(54) **Nietsteuerung**
Rivet supply control
Commande de l'alimentation en rivets

(30) Priorität: 03.12.2010 DE 102010053219
(43) Veröffentlichungstag der Anmeldung: 06.06.2012
(73) Patentinhaber: Broetje-Automation GmbH, 26180 Rastede (DE)
(72) Erfinder: Völz, Matthias, 26127 Oldenburg (DE)
(74) Vertreter: Gottschald, Jan

(56) Entgegenhaltungen:
- EP-A1- 0 691 177
- WO-A1-00/47350
- FR-A1- 2 842 181
- JP-A- 54 102 669
- US-A- 5 385 434
- US-A- 5 472 087

## Beschreibung

Die Erfindung betrifft eine Nietsteuerung für die Bewegungssteuerung von Nietelementen gemäß Anspruch 1 sowie eine Nietbereitstellungseinrichtung gemäß Anspruch 12.

Nietverbindungen spielen seit vielen Jahren vor allem in der Luftfahrtindustrie eine wichtige Rolle. Dabei kommt der Automatisierung von Nietanwendungen im Hinblick auf die immer größer werdenden Flugzeugkomponenten zunehmende Bedeutung zu.

Neben der Durchführung von Nietanwendungen mittels Nietwerkzeugen stellt die zielgenaue und schnelle Bereitstellung von Nietelementen über eine entsprechende Bewegungssteuerung eine besondere Herausforderung für die Anlagenhersteller dar.

Aus der gattungsgemäßen US 5,472,087 ist eine Nietzuführung bekannt, welche eine Basiszuführbaugruppe aufweist mit einem Nietdurchgang, welcher sich in Längsrichtung hindurch erstreckt. Nach einer Rückdrehung des Injektors in die erste Position befindet sich der Niet nun in dem Nietdurchgang.

Eine bekannte Nietbereitstellungseinrichtung (EP 1 531 966 B1) ist mit einem als Kassettenschrank ausgestalteten Nietspeicher ausgestattet, der eine Anzahl übereinander gestapelter Nietkassetten aufweist. Mittels eines Übergabeschlittens, der sich entlang der Nietkassetten verfahren lässt, werden Nietelemente von der jeweils angefahrenen Nietkassette an einen Nietausgang übergeben.

Die bekannte Nietbereitstellungseinrichtung ist regelmäßig mit einer Nietsteuerung ausgestattet, die die Bewegungssteuerung, insbesondere den Empfang und den Weitertransport der übergebenen Nietelemente übernimmt Die Nietsteuerung basiert meist auf der Ansteuerung einer Anzahl von Sperrschiebern, was stets zu einer konstruktiv aufwendigen Gesamtanordnung fuhrt.

Der Erfindung liegt das Problem zugrunde, eine Nietsteuerung anzugeben, die auf konstruktiv einfache Weise eine effektive Bewegungssteuerung von Nietelementen erlaubt.

Das obige Problem wird durch eine Nietsteuerung mit den Merkmalen von Anspruch 1 gelöst.

Wesentlich ist die Überlegung, dass sich eine besonders effektive Bewegungssteuerung von Nietelementen mit einer Anordnung umsetzen lässt, bei der eine Steuerwelle zumindest einen Teil eines Nietkanals derart durchdringt, dass durch ein Verschwenken der Steuerwelle der Durchtritt von Nietelementen und/oder Fluid durch den Steuerbereich hindurch steuerbar ist.

Die Verwendung einer Steuerwelle ist vorliegend in vielerlei Hinsicht vorteilhaft. Dadurch, dass die Steuerwelle ausschließlich schwenkbeweglich geführt werden muss, kann auf kostspielige und störanfällige Linearführungen verzichtet werden.

Ferner lassen sich durch eine entsprechende Auslegung der Steuerwelle vielfältige Möglichkeiten der Bewegungssteuerung mit geringem konstruktivem Aufwand abbilden.

Vorteilhaft ist schließlich, dass die Nietsteuerung mittels Steuerwelle die Verwendung einer gemeinsamen Steuerwelle für mehrere Nietsteuereinheiten erlaubt. Damit kann darauf verzichtet werden, separate Steueraktuatoren für die Nietsteuereinheiten vorsehen zu müssen.

Eine Variante gemäß Anspruch 4 sieht vor, dass die Steuerwelle eine Nietkanal-Durchgangsbohrung aufweist, die je nach Stellung der Steuerwelle einen Verbindungsabschnitt zwischen dem Eingangsabschnitt und dem Ausgangsabschnitt des Nietkanals bereitstellt, oder eben den Durchtritt von Nietelementen und/oder von Fluid sperrt. Eine solche Durchgangsbohrung läßt sich fertigungstechnisch leicht realisieren.

Weiter vorzugsweise ist die Steuerwelle gemäß Anspruch 9 zusätzlich mit einer Fluidkanal-Durchgangsbohrung ausgestattet, über die insbesondere bei in der Sperrstellung befindlicher Steuerwelle eine Transport-Fluidströmung zum Weitertransport der Nietelemente zur Nietanwendung erzeugbar ist. Die Integration einer solchen Transportfunktion in die Nietsteuerung führt insgesamt zu einem besonders kompakten Aufbau. Nach einer weiteren Lehre, der ebenfalls eigenständige Bedeutung zukommt, wird eine Nietbereitstellungseinrichtung gemäß Anspruch 12 beansprucht.

Die Nietbereitstellungseinrichtung nach der weiteren Lehre ist mit einem als Kassettenschrank ausgestalteten Nietspeicher ausgestattet, der mindestens zwei gestapelte Nietkassetten aufweist. Zur Übergabe von Nietelementen aus den Nietkassetten ist ein Übergabeschlitten vorgesehen, der in Stapelrichtung der Nietkassetten verfahrbar ist.

Für die Bewegungssteuerung der zu übergebenden Nietelemente ist der Übergabeschlitten mit einer oben vorgeschlagenen Nietsteuerung mit Steuerwelle ausgestattet. Auf diese Weise lässt sich die Übergabe, insbesondere der Empfang und der Weitertransport der zu übergebenden Nietelemente konstruktiv besonders einfach umsetzen.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Nietbereitstellungseinrichtung in einer perspektivischen Ansicht schräg von vorne,
- Fig. 2: zwei seriell geschaltete Nietbereitstellungseinrichtungen gemäß Fig. 1 im Betrieb mit einem nur schematisch dargestellten Nietwerkzeug, jeweils in einer Seitenansicht,
- Fig. 3: die Kassettenverriegelungen der Nietbereitstellungseinrichtung gemäß Fig. 1 a) im verriegelten Zustand und b) im entriegelten Zustand, jeweils in einer perspektivischen Ansicht,
- Fig. 4: eine zentrale Montageplatte der Nietbereitstellungseinrichtung gemäß Fig. 1 bei montiertem Übergabeschlitten in einer perspektivischen Ansicht,
- Fig. 5: die Nietsteuerung des Übergabeschlittens gemäß Fig. 4 in einer perspektivischen Ansicht,
- Fig. 6: die Nietsteuerung gemäß Fig. 5 in einer Schnittansicht entlang der Schnittlinie VI-VI a) in der Durchlassstellung und b) in der Sperrstellung,
- Fig. 7: die Steuerwelle der Nietsteuerung gemäß Fig. 5 in einer perspektivischen Ansicht.

Die in der Zeichnung dargestellte Nietbereitstellungseinrichtung R dient der automatisierten Bereitstellung von Nietelementen 1 o. dgl.. Dabei ist der Begriff "Nietelement" weit zu verstehen und umfasst alle möglichen Verbindungselemente, die in irgendeiner Weise nietähnlich ausgestaltet sind.

In der Nietbereitstellungseinrichtung R bevorratete Nietelemente 1 werden bei bestimmungsgemäßem Gebrauch an eine Nietsteuerung übergeben, von der Nietsteuerung empfangen und zu der jeweiligen Nietanwendung weitertransportiert.

Der Nietsteuerung kommt für die Funktion der Nietbereitstellungseinrichtung R ganz besondere Bedeutung zu. Sie kann grundsätzlich aber auch anderweitig Anwendung finden, beispielsweise in Kombination mit Rüttelförderern o. dgl.. Vor diesem Hintergrund wird die Erläuterung der Nietsteuerung hier vorangestellt.

Die Nietsteuerung dient ganz allgemein der Bewegungssteuerung von Nietelementen 1 o. dgl.. Die Bewegungssteuerung der Nietelemente 1 umfasst sowohl ein aktives Antreiben der Nietelemente 1 als auch ein passives Sperren oder Freigeben der Nietelemente 1. Im Zusammenhang mit einer obigen Nietbereitstellungseinrichtung R kommt der Nietsteuerung vorzugsweise die Funktion des Empfangs und der Weiterleitung von Nietelementen 1 zu, wie noch gezeigt wird. Insoweit ist auch der Begriff "Bewegungssteuerung" weit zu verstehen.

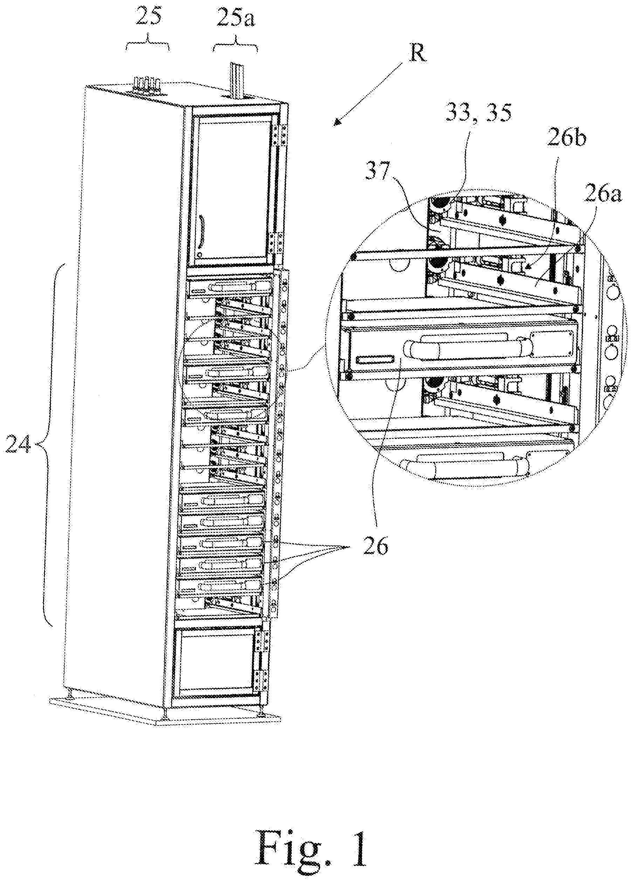

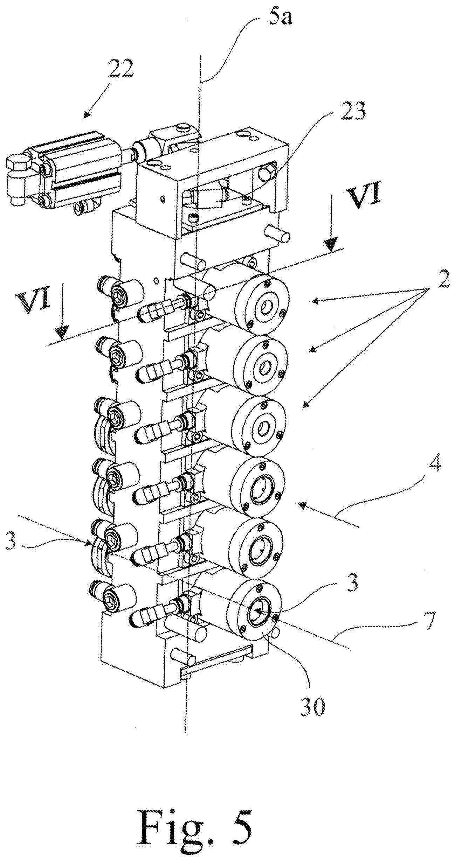

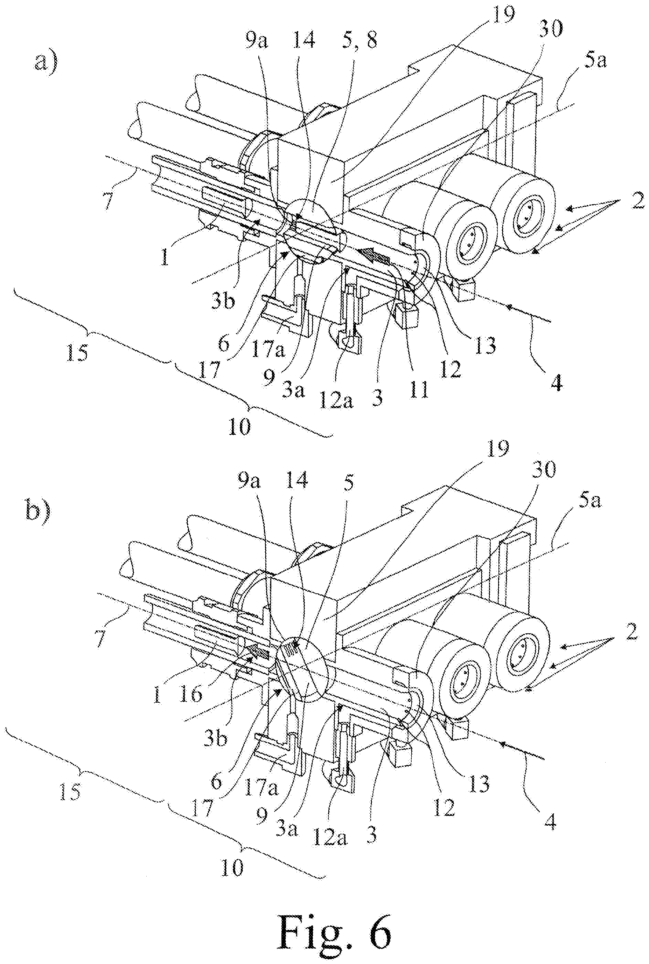

Die Fig. 5 bis 7 zeigen eine vorschlagsgemäße Nietsteuerung, die hier und vorzugsweise in der in den Fig. 1 bis 4 dargestellten Nietbereitstellungseinrichtung R Anwendung findet. Die Nietsteuerung ist grundsätzlich modular aufgebaut und weist mindestens eine Nietsteuereinheit 2, hier insgesamt sechs Nietsteuereinheiten 2, auf. Der Aufbau einer Nietsteuereinheit 2 lässt sich den Darstellungen gemäß Fig. 6 entnehmen. Im Folgenden ist im Sinne einer übersichtlichen Darstellung fast durchweg die Rede von nur einer einzigen Nietsteuereinheit 2. Alle Ausführungen zu dieser Nietsteuereinheit 2 gelten für alle weiteren Nietsteuereinheiten 2 der Nietsteuerung entsprechend.

Im montierten Zustand ist die Nietsteuerung in den Niet-Materialfluss geschaltet. Hierfür ist jede Nietsteuereinheit 2 mit einem Nietkanal 3 ausgestattet, durch den die jeweiligen Nietelemente 1 vorschiebbar sind.

Der Transport der Nietelemente 1 erfolgt hier und vorzugsweise über eine Fluidströmung, die in den jeweiligen Abschnitt des Nietkanals 3 eingeleitet wird. Bei dem Fluid handelt es sich im einfachsten Fall um Luft.

Der Nietkanal 3 weist einen Eingangsabschnitt 3a für den Empfang von Nietelementen 1 und einen Ausgangsabschnitt 3b auf. Die Nietelemente 1 verlaufen entsprechend in Förderrichtung 4 vom Eingangsabschnitt 3a zum Ausgangsabschnitt 3b und von dort zu der jeweiligen Nietanwendung.

Interessant ist nun, dass die Nietsteuereinheit 2 der vorschlagsgemäßen Nietsteuerung eine Steuerwelle 5 aufweist, die den Nietkanal 3 in einem Steuerbereich 6 zwischen dem Eingangsabschnitt 3a und dem Ausgangsabschnitt 3b durchdringt. Dabei kann es grundsätzlich vorgesehen sein, dass die Steuerwelle 5 nur einen Teil des Nietkanals 3 durchdringt. Hier und vorzugsweise ist allerdings eine Durchdringung des vollständigen Nietkanals 3 vorgesehen.

Eine Zusammenschau der Fig. 6a und 6b ergibt, dass durch ein Verschwenken der Steuerwelle 5 der Durchtritt von Nietelementen 1 und/oder Fluid durch den Steuerbereich 6 hindurch steuerbar ist. Bei dem Verschwenken der Steuerwelle 5 handelt es sich stets um ein Verschwenken um die Steuerwellenachse 5a. Bereits hier wird deutlich, dass durch die Verwendung der Steuerwelle 5 auch komplizierte Steueraufgaben auf konstruktiv einfache Weise umgesetzt werden können.

Für die Ausrichtung der Steuerwelle 5 gegenüber dem Nietkanal 3 sind verschiedene Varianten denkbar. Hier und vorzugsweise ist die Steuerwellenachse 5a im Wesentlichen quer zu der Nietkanal-Längsachse 7 im Eingangsabschnitt 3a und/oder im Ausgangsabschnitt 3b ausgerichtet. Dabei ist es vorzugsweise vorgesehen, dass, wie schon erläutert, die Steuerwelle 5 den vollen Querschnitt des Nietkanals 3 durchdringt.

Letztlich wirkt die Steuerwelle 5 hier nach Art eines Absperrventils. Entsprechend stellt die Steuerwelle 5 in der in Fig. 6a dargestellten Durchlassstellung einen für Nietelemente 1 und Fluid offenen Verbindungsabschnitt 8 zwischen dem Eingangsabschnitt 3a und dem Ausgangsabschnitt 3b bereit. Fig. 6b dagegen zeigt, dass die Steuerwelle 5 in einer Sperrstellung den Durchtritt von Nietelementen 1 und/oder von Fluid zwischen dem Eingangsabschnitt 3a und dem Ausgangsabschnitt 3b im Wesentlichen sperrt.

Die Formulierung "im Wesentlichen sperrt" bedeutet, dass es sich nicht notwendigerweise um eine vollständige Sperrung handeln muß. In besonders bevorzugter Ausgestaltung ist es allerdings sogar vorgesehen, dass in der Sperrstellung jedenfalls der Ausgangsabschnitt 3b in Richtung des Eingangsabschnitts 3a im Hinblick auf den Fluiddurchtritt abgedichtet ist, wie noch erläutert wird.

Zur konstruktiven Umsetzung von Durchlassstellung und Sperrstellung wird vorgeschlagen, dass die Steuerwelle 5 eine in Fig. 6 dargestellte Nietkanal-Durchgangsbohrung 9 aufweist, deren Querschnitt im Wesentlichen dem Querschnitt des Nietkanals 3 im Eingangsabschnitt 3a und/oder im Ausgangsabschnitt 3b entspricht. Je nach Stellung der Steuerwelle 5 stellt die Nietkanal-Durchgangsbohrung 9 den oben angegebenen Verbindungsabschnitt 8 zwischen dem Eingangsabschnitt 3a und dem Ausgangsabschnitt 3b des Nietkanals 3 bereit oder sperrt die Nietkanal-Durchgangsbohrung 9 den Durchtritt von Nietelementen 1 und/oder von Fluid zwischen dem Eingangsabschnitt 3a und dem Ausgangsabschnitt 3b.

Die Funktion der Nietsteuereinheit 2 beschränkt sich aber nicht auf die reine Funktion eines Absperrventils. Vielmehr weist die Nietsteuereinheit 2 eine Übergabe-Fördereinrichtung 10 auf, die dem Fördern eines Nietelements 1 vom Eingangsabschnitt 3a in den Ausgangsabschnitt 3b hinein mittels einer Übergabe-Fluidströmung 11 dient (Fig. 6a). Hierfür weist die Übergabe-Fördereinrichtung 10 mehrere Fluidkanäle 12 auf, die mit dem Eingangsabschnitt 3a des Nietkanals 3 kommunizieren und über die die Übergabe-Fluidströmung 11 erzeugbar ist. Hierfür sind die Fluidkanäle 12 mit einer entsprechenden Fluidzufuhr 12a gekoppelt. Die Richtung der Übergabe-Fluidströmung 11 geht auf die Ausrichtung der Fluidkanäle 12 zurück, die sich aus der Darstellung gemäß Fig. 6 ergibt.

Es hat sich gezeigt, dass sich zusammen mit der konischen Öffnung 13 des Eingangsabschnitts 3a durch die Übergabe-Fluidströmung 11 ein Unterdruck im Bereich der konischen Öffnung 13 nach Art des Venturi-Effekts einstellt, der zu einem Ansaugen eines vor der Öffnung 13 befindlichen Nietelements 1 führt.

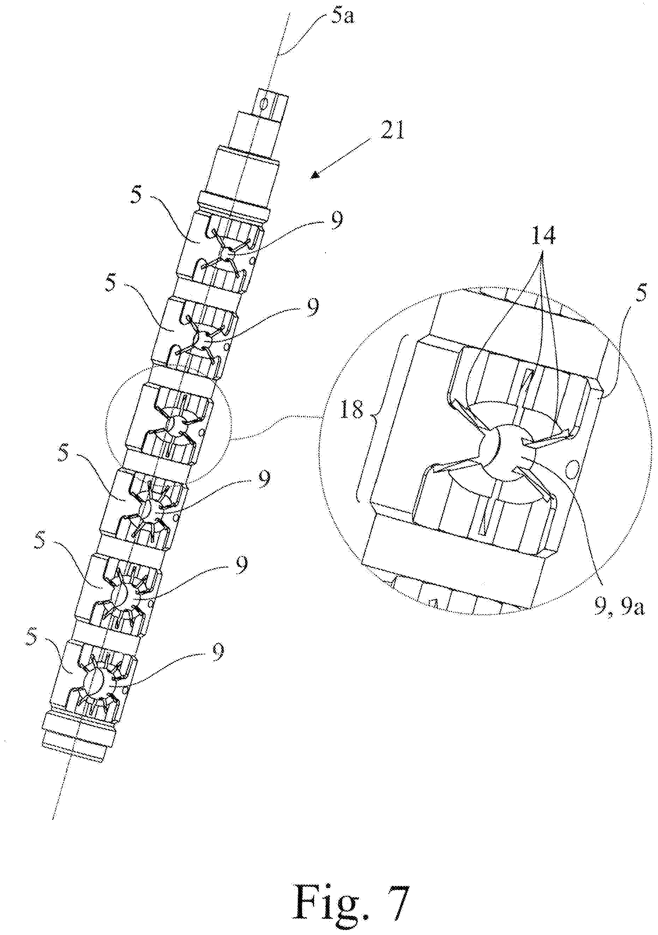

Für den effektiven Transport der Nietelemente 1 muss ein bestimmter Fluid-Volumenstrom sichergestellt sein. Hierfür weist die Übergabe-Fördereinrichtung 10 im Bereich der Steuerwelle 5 mindestens eine Entlüftungsöffnung 14 auf, über die zumindest ein Teil der Übergabe-Fluidströmung 11 abströmt. In einer konstruktiv besonders einfach zu realisierenden Variante ist es hierfür vorgesehen, dass die Steuerwelle 5 eine Reihe von in eine Austrittsöffnung 9a der Nietkanal-Durchgangsbohrung 9 mündenden Entlüftungsrillen 14 aufweist (Fig. 6, 7).

Weiter ist die Nietsteuereinheit 2 mit einer Transport-Fördereinrichtung 15 zum Weitertransport eines Nietelements 1 vom Ausgangsabschnitt 3b zur Nietanwendung mittels einer Transport-Fluidströmung 16 ausgestattet. Der Transport des Nietelements 1 erfolgt dabei in der in Fig. 6b) dargestellten Konstellation.

Ein interessanter Aspekt, dem vorliegend eigenständige Bedeutung zukommt, ist die Tatsache, dass die Transport-Fluidströmung 16 hier bezogen auf den Querschnitt des Nietkanals 3 im Wesentlichen zentrisch in den Ausgangsabschnitt 3b des Nietkanals 3 eingeleitet wird. Damit lässt sich ein optimaler Niettransport ohne ein Verkanten der Nietelemente 1 unterstützen.

Im Einzelnen weist die Transport-Fördereinrichtung 15 hier und vorzugsweise genau eine Fluidkanal-Durchgangsbohrung 17 in der Steuerwelle 5 auf, die in einer in Fig. 6b) dargestellten Transportstellung der Steuerwelle 5 mit dem Ausgangsabschnitt 3b beiderseits und mit einer Fluidzufuhr 17a andererseits kommuniziert. Dabei ist die Transportstellung der Steuerwelle 5 offensichtlich mit der Sperrstellung der Steuerwelle 5 identisch. In der Durchlassstellung ist es so, dass die Fluidkanal-Durchgangsbohrung 17 außer Kommunikation von der Fluidzufuhr 17a und/oder dem Ausgangsabschnitt 3b ist.

Aus den obigen Erläuterungen geht hervor, dass der Steuerwelle 5 vorteilhafterweise mehrere unterschiedliche Funktionen zukommen, was zu einer hohen Kompaktheit der Anordnung führt. Eine optimale Funktionsstruktur ergibt sich insgesamt dadurch, dass die Steuerwelle 5 in der Durchlaßstellung einen für Nietelemente 1 offenen Verbindungsabschnitt 8 zwischen dem Eingangsabschnitt 3a und dem Ausgangsabschnitt 3b bereitstellt und dass die Steuerwelle 5 in der Sperrstellung den Durchtritt von Nietelementen 1 zwischen dem Eingangsabschnitt 3a und dem Ausgangsabschnitt 3b sperrt und wie oben angesprochen eine bezogen auf den Querschnitt des Nietkanals 3 im Wesentlichen zentrische Einleitung einer Transport-Fluidströmung 16 in den Nietkanal 3, insbesondere in den Ausgangsabschnitt 3b des Nietkanals 3, erlaubt.

Es lässt sich der Darstellung in Fig. 6b) entnehmen, dass die Lage der Austrittsöffnung der Fluidkanal-Durchgangsbohrung 17 im Ausgangsabschnitt 3b durch die Lage der Fluidkanal-Durchgangsbohrung 17 in der Steuerwelle 5 leicht eingestellt werden kann. So ist auch die obige, zentrische Einleitung der Transport-Fluidströmung 16 auf einfache Weise zu realisieren.

Aus der obigen Darstellung ist ersichtlich, dass der Auslegung der Steuerwelle 5 zur Umsetzung unterschiedlicher Steueraufgaben kaum Grenzen gesetzt sind. Hier und vorzugsweise weist die Steuerwelle 5 eine Nietkanal-Durchgangsbohrung 9 auf, die im Wesentlichen senkrecht zu der Steuerwellenachse 5a ausgerichtet ist und deren Längsachse durch die Steuerwellenachse 5a verläuft. Hier sind andere Ausrichtungen denkbar.

Die Fluidkanal-Durchgangsbohrung 17 ist im Wesentlichen senkrecht zu der Steuerwellenachse 5 ausgerichtet, wobei die Längsachse dieser Durchgangsbohrung 17 versetzt zu der Steuerwellenachse 5a angeordnet ist. Auch hier sind andere Varianten denkbar.

Insbesondere darf ausdrücklich darauf hingewiesen werden, dass zusätzliche Steuerleitungen jeglicher Art in der Steuerwelle 5 vorgesehen sein können.

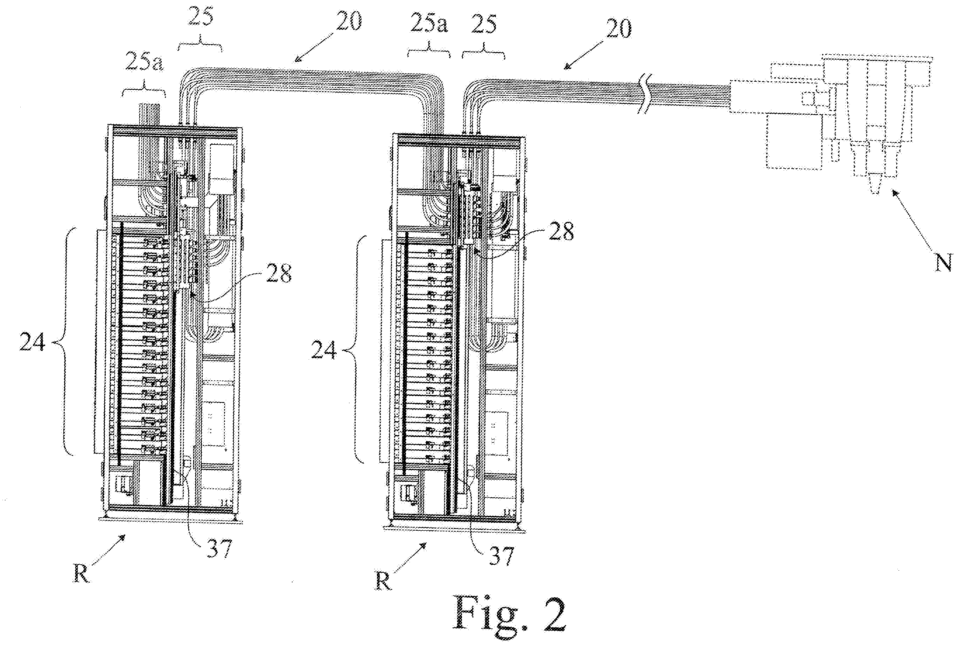

Hinsichtlich der Fluidströmung kann die Steuerwelle 5 in der Sperrstellung wie schon angedeutet eine unterschiedliche Dichtigkeit bereitstellen. Hier und vorzugsweise ist die Steuerwelle 5 mit einer Dichtungsfläche 18 ausgestattet, die der Abdichtung gegenüber dem Gehäuse 19 der Nietsteuereinheit 2 dient. Die Dichtungsfläche 18 ist nur durch die Entlüftungsöffnungen 14 durchbrochen. Damit lässt sich gewährleisten, dass in der in Fig. 6b) dargestellten Sperrstellung die Einleitung der Transport-Fluidströmung 16 eine Druckwelle im Ausgangsabschnitt 3b erzeugt, die den sicheren Transport des Nietelements 1 zu der jeweiligen Nietanwendung gewährleistet. In diesem Zusammenhang ist zu berücksichtigen, dass die Nietanwendung nicht selten mehr als 10 Meter entfernt von der Nietsteuereinheit 2 gelegen ist, wobei der Transport des Nietelements 1 durch in Fig. 2 dargestellte Schlauchleitungen 20 erfolgt, so dass von der Transport-Fördereinrichtung 15 verglichen mit der Übergabe-Transporteinrichtung 10 eine kinetische Energie von beträchtlicher Höhe auf das Nietelement 1 übertragen werden muss.

Für die Formgebung der Steuerwelle 5 sind eine ganze Reihe vorteilhafter Varianten denkbar. Beispielsweise kann die Steuerwelle 5 abschnittsweise im Wesentlichen kugelförmig ausgestaltet sein und so nach Art eines Kugelventils arbeiten.

Fig. 7 zeigt, dass bei dem dargestellten und insoweit bevorzugten Ausführungsbeispiel mehrere Steuerwellen 5 zu einer gemeinsamen Steuerwelle 21 zusammengefasst worden sind. Das trägt dem Umstand Rechnung, dass hier mindestens zwei nebeneinander angeordnete Nietsteuereinheiten 2, im einzelnen insgesamt sechs nebeneinander angeordnete Nietsteuereinheiten 2, vorgesehen sind, wobei die Steuerwellen 5 der Nietsteuereinheiten 2 jeweils durch einen axialen Abschnitt der gemeinsamen Steuerwelle 21 bereitgestellt sind. Hier wird deutlich, dass für alle Nietsteuereinheiten 2 nur noch ein einziger Aktuator 22 erforderlich ist, der dem motorischen Verschwenken der gemeinsamen Steuerwelle 21 dient.

Bei dem dargestellten und insoweit bevorzugten Ausführungsbeispiel handelt es sich bei dem Aktuator 22 um einen pneumatischen Linearantrieb, der über einen Antriebshebel 23 antriebstechnisch mit der gemeinsamen Steuerwelle 21 gekoppelt ist. Andere Varianten für den Aktuator 22 sind denkbar.

Nach einer weiteren Lehre, der eigenständige Bedeutung zukommt, wird eine in den Fig. 1 bis 4 dargestellte Nietbereitstellungseinrichtung R beansprucht, die mit einer oben angesprochenen Nietsteuerung ausgestattet ist.

Die Nietbereitstellungseinrichtung R dient, wie schon erläutert, zur Bereitstellung von Nietelementen 1 o.dgl. für mindestens eine Nietanwendung. In Fig. 2 ist angedeutet, dass die Nietanwendung von einem automatisierten Nietwerkzeug N umgesetzt wird. Fig. 2 zeigt ferner, dass dort zwei Nietbereitstellungseinrichtungen R in Serie geschaltet sind, was weiter unten noch erläutert wird.

Die Nietbereitstellungseinrichtung R verfügt über einen Nietspeicher 24, in dem vorzugsweise unterschiedliche Nietelemente 1 gespeichert werden können. Weiter verfügt die Nietbereitstellungseinrichtung R über mindestens einen Nietausgang 25, hier über insgesamt 6 Nietausgänge 25.

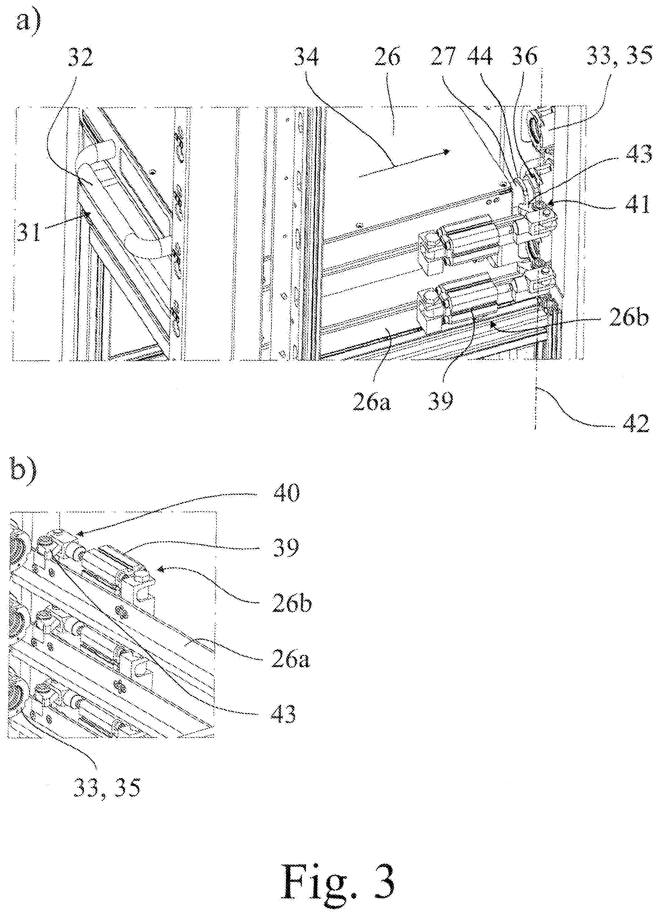

Der Nietspeicher 25 ist nach Art eines Kassettenschranks mit mindestens zwei gestapelten, insbesondere austauschbaren Nietkassetten 26 ausgestattet, die jeweils mindestens einen Ausgangsflansch 27 o. dgl. zur Abgabe von Nietelementen 1 aufweisen. Der Ausgangsflansch 27 der Nietkassette 26 kann unterschiedlich ausgestaltet sein. Hier und vorzugsweise ist der Ausgangsflansch 27 rohrartig ausgestaltet, wie der Darstellung in Fig. 3a) zu entnehmen ist.

Es ist weiter ein Übergabeschlitten 28 vorgesehen, der eine oben erläuterte Nietsteuerung mit hier und vorzugsweise mehreren Nietsteuereinheiten 2 aufweist. Die Nietsteuereinheiten 2 sind jeweils auf unterschiedliche Nietelemente 1 hin ausgelegt, so dass je nachdem, welches Nietelement 1 übergeben werden soll, die passende Nietsteuereinheit 2 zum Einsatz kommt.

Um die jeweils passende Nietsteuereinheit 2 auf die jeweils gewünschte Nietkassette 26 ausrichten zu können, ist der Übergabeschlitten 28 entlang der Nietkassetten 26 in deren Stapelrichtung 29 verfahrbar. Damit ist eine Nietsteuereinheit 2 der Nietsteuerung auf eine Nietkassette 26 zur Übergabe eines Nietelements 1 von der jeweiligen Nietkassette 26 auf die jeweilige Nietsteuereinheit 2 ausrichtbar.

Zwei Stellungen des Übergabeschlittens 28 sind in Fig. 2 gezeigt. Die Ausgangsabschnitte 3b der Nietsteuereinheiten 2 sind mit den oben angesprochenen Nietausgängen 25 verbunden. Ferner ist es so, dass jede Nietsteuereinheit 2 einen dem Eingangsabschnitt 3a des Nietkanals 3 zugeordneten Eingangsflansch 30 für den Empfang von Nietelementen 1 aufweist, wobei bei der Übergabe eines Nietelements 1 der nietkassettenseitige Ausgangsflansch 27 und der nietsteuerseitige Eingangsflansch 30 über einen Spalt beabstandet sind.

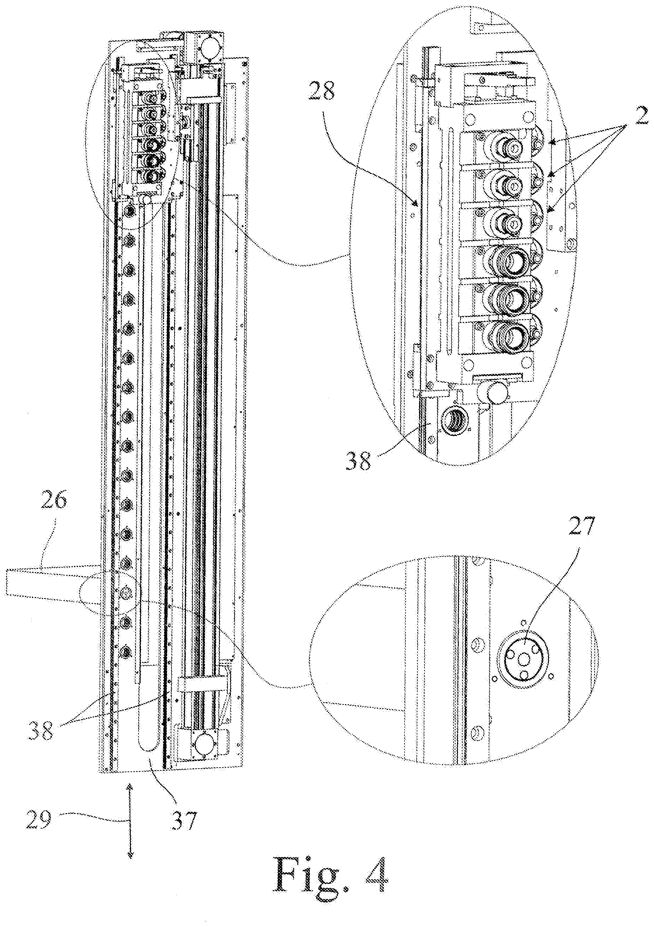

Ein irgendwie gearteter Formschluss zwischen den beiden Flanschen 27, 30 findet also nicht statt. Fig. 4 zeigt in der unteren Detaildarstellung, wie der nietkassettenseitige Ausgangsflansch 27 gegenüber der Nietsteuerung und den dortigen Eingangsflanschen 30 positioniert ist. Dadurch, dass stets ein Spalt zwischen den nietkassettenseitigen Ausgangsflanschen 27 und den nietsteuerseitigen Eingangsflanschen 30 besteht, ist es ausreichend, den Übergabeschlitten 28 und die Nietsteuerung insgesamt in nur einem einzigen Freiheitsgrad zu bewegen. Um eine fehlerfreie Übergabe zu gewährleisten, hat es sich als vorteilhaft erwiesen, wenn der Spalt in einem Bereich zwischen etwa 0,2 mm und etwa 0,6 mm liegt. Besonders bevorzugt ist hier eine Spaltbreite von etwa 0,4 mm.

Es wurde schon darauf hingewiesen, dass die unterschiedlichen Nietkassetten 26 vorzugsweise zumindest zum Teil Nietelemente 1 unterschiedlicher Abmessungen speichern, wobei der Übergabeschlitten 28 entsprechend mehrere, auf die unterschiedlichen Abmessungen angepasste Nietsteuereinheiten 2 aufweist. Die Anpassung der Nietsteuereinheiten 2 betrifft in erster Linie den Durchmesser des Nietkanals 3 und die entsprechenden Anschlüsse, wie sich beispielsweise aus der oberen Detaildarstellung in Fig. 4 ergibt.

Eine beispielhafte Übergabe eines Nietelements 1 von einer Nietkassette 26 wird im Folgenden erläutert.

Zunächst richtet der Übergabeschlitten 28 eine der Nietsteuereinheiten 2 auf die gewünschte Nietkassette 26 aus, so dass der nietsteuerseitige Eingangsflansch 30 auf den nietkassettenseitigen Ausgangsflansch 27 zentriert ist. Eine in der Nietkassette 26 vorgesehene, nicht dargestellte Vereinzelungseinrichtung gibt dann ein einzelnes Nietelement 1 frei, das den Spalt zwischen den beiden Flanschen 27, 30 passiert und vom Eingangsabschnitt 3a der Nietsteuereinheit 2 empfangen wird. Hierfür wird die Übergabe-Fördereinrichtung 10 rechtzeitig aktiviert, so dass das Nietelement 1 über den oben angesprochenen Venturi-Effekt in den Eingangsabschnitt 3a hineingezogen und anschließend mittels der Übergabe-Fluidströmung 11 in den Ausgangsabschnitt 3b gefördert wird. Dann wird die bis hierhin in der Durchlassstellung befindliche Steuerwelle 21 in die Sperrstellung überführt (Übergang von Fig. 6a auf Fig. 6b). Schließlich wird die Transport-Fördereinrichtung 15 aktiviert, so dass Nietelement 1 durch den Aufbau einer Druckwelle über die Fluidkanal-Durchgangsbohrung 17 zum Nietwerkzeug N über die Schlauchleitung 20 weitertransportiert wird.

Ein interessanter Aspekt, dem eigenständige Bedeutung zukommt, besteht darin, dass die Nietbereitstellungseinrichtung R so ausgestaltet ist, dass sie mit einer weiteren Nietbereitstellungseinrichtung R in Serie geschaltet werden kann. Auf die Realisierung eines Übergabeschlittens 28 kommt es für diesen weiteren Aspekt nicht an.

Wesentlich ist, dass neben dem Nietausgang 25 mindestens ein Nieteingang 25a vorgesehen ist und dass die Anordnung so getroffen ist, dass ein an einem Nieteingang 25a bereitgestelltes Nietelement 1 an den Nietausgang 25 durchreichbar ist. Damit lässt sich ein Nietwerkzeug N von mehreren Nietbereitstellungseinrichtungen R mit Nietelementen 1 versorgen, ohne dass eine irgendwie geartete Förderweiche zwischen den Nietbereitstellungseinrichtungen R und dem Nietwerkzeug N vorgesehen sein muss.

In besonders bevorzugter Ausgestaltung ist die Nietbereitstellungseinrichtung R mit einem oben angesprochenen Übergabeschlitten 28 ausgestattet, wobei der Übergabeschlitten 28 zum Durchreichen eines Nietelements 1 von einem Nieteingang 25a zu einem Nietausgang 25 in eine Durchreichposition verfahrbar ist und dann ein durchzureichendes Nietelement 1 an den Übergabeschlitten 28 übergebbar ist. Von besonderer Bedeutung ist dabei die Tatsache, dass der Übergabeschlitten 28 nunmehr doppelt genutzt wird, nämlich einerseits für die Übergabe von Nietelementen 1 von den Nietkassetten 26 und andererseits für die Übergabe von Nietelementen 1, die am Nieteingang 25a bereitgestellt worden sind.

Es ergibt sich aus der Darstellung gemäß Fig. 2, dass die Durchreichposition (Fig. 2 rechts) unterschiedlich zu den Übergabepositionen (Fig. 2 links) ist, in denen eine Nietsteuereinheit 2 auf eine Nietkassette 26 zur Übergabe eines Nietelements 1 von der jeweiligen Nietkassette 26 auf die jeweilige Nietsteuereinheit 2 ausgerichtet ist.

Im Bereich der Durchreichposition sind eine Reihe von nicht dargestellten Durchreichflanschen vorgesehen, die in einer Reihe mit den Ausgangsflanschen 27 der Nietkassetten 26 angeordnet sind und sich geometrisch nicht wesentlich von diesen Ausgangsflanschen 27 unterscheiden. Die Durchreichflansche sind jeweils über ein Schlauchsegment mit einem Nieteingang 25a verbunden, wie in Fig. 2 angedeutet ist. Bei in der Durchreichposition stehendem Übergabeschlitten 28 sind die Eingangsflansche 30 der Nietsteuereinheiten 2 auf die Durchreichflansche ausgerichtet, wobei auch hier vorzugsweise ein oben angesprochener Spalt zwischen den sich gegenüberliegenden Flanschen vorgesehen ist. Im Übrigen ist der Übergabeablauf weitgehend identisch zu dem oben erläuterten Ablauf für die Übergabe von Nietelementen 1 aus den Nietkassetten 26:
Soll beispielsweise ein Nietelement 1 aus einer Nietkassette 26 der in Fig. 2 links dargestellten Nietbereitstellungseinrichtung R dem Nietwerkzeug N bereitgestellt werden, so wird das Nietelement 1 aus der gewünschten Nietkassette 26 an den dortigen Übergabeschlitten 28 übergeben und in Richtung des dortigen Nietausgangs 25 weitertransportiert. Über die Schlauchleitung 20 erreicht das Nietelement 1 einen Übergangsflansch der in Fig. 2 rechts dargestellten Nietbereitstellungseinrichtung R, passiert den dortigen Spalt und gelangt in den Eingangsabschnitt 3a der jeweiligen Nietsteuereinheit 2. Dort wird wiederum der oben erläuterte Übergabeablauf durchgeführt, so dass das Nietelement 1 im Ergebnis zum Nietwerkzeug N weitertransportiert wird.

Ein weiterer interessanter Aspekt, dem wiederum eigenständige Bedeutung zukommt, ist eine ganz besondere Art der Festlegung der an der Vorderseite 31 der Nietbereitstellungseinrichtung R u.a. mittels Handgriff 32 austauschbaren Nietkassetten 26 in ihren jeweiligen Betriebsstellungen.

Wie oben erläutert, dient die Nietbereitstellungseinrichtung R zur Bereitstellung von Nietelementen 1 aus einem Nietspeicher 24 über mindestens einen Nietausgang 25 für mindestens ein Nietwerkzeug N, wobei der Nietspeicher 24 mindestens zwei obige, gestapelte, austauschbare Nietkassetten 26 mit jeweils mindestens einem Ausgangsflansch 27 o. dgl. zur Abgabe von Nietelementen 1 aufweist.

Den Nietkassetten 26 ist jeweils eine Kassettenführung 26a und eine lösbare Kassettenverriegelung 26b zugeordnet, wobei eine Nietkassette 26 zu deren Einbau über die Kassettenführung 26a bis zu einer Betriebsstellung einschiebbar und dort mittels der Kassettenverriegelung 26b fixierbar ist. Die Kassettenführung 26a und die Kassettenverriegelung 26b ergibt sich aus einer Zusammenschau der Fig. 1 und 3.

Wesentlich ist nun, dass die Kassettenverriegelung 26b, wie aus den Darstellungen gemäß Fig. 3 ersichtlich, der Kassettenführung 26a zugeordnet und zur Verriegelung in Eingriff mit der Nietkassette 26 bringbar ist.

Damit stützt sich die Kassettenverriegelung 26b an der Kassettenführung 26a ab, die aufgrund ihrer Führungseigenschaften nur wenig toleranzbehaftet ausgelegt ist. Dies bildet die Voraussetzung für eine möglichst genaue Einnahme der jeweiligen Verriegelungsposition (Betriebsstellung). Dadurch, dass die Kassettenverriegelung 26b durch ihre Anordnung an der Kassettenführung 26a stets eine definierte Position relativ zu der Nietkassette 26 einnimmt, kann auf ein aufwendiges Justieren der Kassettenverriegelung 26b bei deren Montage verzichtet werden.

Die genaue Einnahme der Betriebsstellung ist von ganz besonderer Bedeutung, wenn den Nietkassetten 26 ein oben angesprochener Übergabeschlitten 28 zugeordnet sein soll. Sofern die ebenfalls erläuterte Konstellation mit einem Spalt zwischen nietkassettenseitigem Ausgangsflansch 27 und nietsteuerseitigen Eingangsflansch 30, dessen Breite sich im 1/10 mm-Bereich bewegt, vorgesehen sein soll, ist die genaue Einnahme der Betriebsposition sogar funktionsnotwendig.

Die Fig. 1 und 3 zeigen eine besonders einfache konstruktive Umsetzung der Kassettenverriegelung 26b, die höchsten Genauigkeitsanforderungen gerecht wird. Der Grund hierfür besteht darin, dass die Kassettenverriegelung 26b die Nietkassette 26 im verriegelten Zustand an einen ortsfesten Kassettenanschlag 33 andrückt, wobei hier und vorzugsweise die Andrückrichtung 34 der Einschiebrichtung der Nietkassette 26 entspricht.

Für die Ausgestaltung des Kassettenanschlags 33 sind eine ganze Reihe von Möglichkeiten denkbar. Hier und vorzugsweise wird der ortsfeste Kassettenanschlag 33 durch einen Montageflansch 35 gebildet, durch den der Ausgangsflansch 27 der jeweiligen Nietkassette 26 zumindest zum Teil hindurch ragt (siehe Zusammenschau Fig. 3a und Fig. 4, untere Detaildarstellung). Bei dem dargestellten und insoweit bevorzugten Ausführungsbeispiel ist der Ausgangsflansch 27 der Nietkassette 26 mit einem umlaufenden Bund 36 ausgestattet worden, der einen Gegenanschlag zu dem Montageflansch 35 bildet.

Die Verwendung des ohnehin vorhandenen Ausgangsflansches 27 der Nietkassette 26 ist einerseits konstruktiv effizient. Andererseits ist dies auch unter Toleranzgesichtspunkten vorteilhaft, da der Montageflansch 25 gewissermaßen eine Referenzposition bezogen auf die Lage des Übergabeschlittens 28 darstellt.

Besonders gute Resultate im Hinblick auf die Reduzierung von Toleranzen lassen sich, wie hier dargestellt, dadurch realisieren, dass eine Montageplatte 37 vorgesehen ist, an der die Kassettenführung 26a und der Kassettenanschlag 33 bzw. der Montageflansch 35 angeordnet sind. Damit lässt sich im verriegelten Zustand ein nahezu geschlossener Kraftfluss zwischen der Kassettenführung 26a, der Kassettenverriegelung 26b, dem Ausgangsflansch 27 der Nietkassette 26, dem Kassettenanschlag 33 bzw. dem Montageflansch 35 und der Montageplatte 37 erreichen. Entsprechend gering werden bei geeigneter Auslegung die resultierenden Toleranzen hinsichtlich der Einnahme der Betriebsstellung ausfallen.

Dadurch, dass es bei dem dargestellten und insoweit bevorzugten Ausführungsbeispiel auf die genaue Positionierung des Ausgangsflansches 27 der Nietkassette 26 relativ zu den Übergabeschlitten 28 ankommt, ist es vorteilhafterweise vorgesehen, dass auch der Übergabeschlitten 28 an der Montageplatte 37 angeordnet ist. Es lässt sich der Darstellung gemäß Fig. 4 entnehmen, dass der Übergabeschlitten 28 auf zwei Schienen 38 läuft, die auf der den Nietkassetten 26 abgewandten Seite der Montageplatte 37 befestigt sind.

Die Kassettenverriegelung 26b ist vorzugsweise motorisch betätigbar. Im einfachsten Fall ist der Kassettenverriegelung 26b ein linearer Aktuator 39 zugeordnet, bei dem es sich vorzugsweise um einen pneumatischen Aktuator handelt. Der pneumatische Aktuator 39 ist einerends mit der Kassettenführung 26a und anderenends mit einem Verriegelungsmechanismus 40 gekoppelt. Dies lässt sich den Darstellungen gemäß Fig. 3 gut entnehmen.

Auch der Verriegelungsmechanismus 40 ist bei dem dargestellten Ausführungsbeispiel konstruktiv besonders einfach gestaltet. Der Verriegelungsmechanismus 40 weist nämlich lediglich einen schwenkbaren Verriegelungshebel 41 auf, der vorzugsweise an der Kassettenführung 26a angelenkt ist. Die Schwenkachse 41a des Verriegelungshebels 41 verläuft im Wesentlichen vertikal.

Im entriegelten Zustand liegt der Verriegelungshebel 41 außerhalb des Bewegungsbereichs der Nietkassette 26, so dass die Nietkassette 26 problemlos aus der Kassettenführung 26a geschoben werden kann. Zur Verriegelung bewirkt der Aktuator 39 ein Verschwenken des Verriegelungsbolzens 41 derart, dass eine Nase 43 des Verriegelungshebels 41 in Eingriff mit der Nietkassette 26, hier in Eingriff mit einem Teil des Ausgangsflansches 27 der Nietkassette 26 kommt. Für diesen Eingriff ist der Ausgangsflansch 27 der Nietkassette 26 wie in Fig. 3a dargestellt, mit einem weiteren Bund 44 ausgestattet.

Für die Lage des Aktuators 39 sind zahlreiche Möglichkeiten denkbar. Je nach konstruktiven Randbedingungen kann beispielsweise auch eine Anordnung des Aktuators 39 auf der dem Übergabeschlitten 28 zugewandten Seite der Montageplatte 37 vorteilhaft sein.

## Patentansprüche

1. Nietsteuerung für die Bewegungssteuerung von Nietelementen (1) o. dgl., insbesondere für den Empfang und den Weitertransport von Nietelementen (1), mit mindestens einer Nietsteuereinheit (2), wobei die Nietsteuereinheit (2) einen Nietkanal (3) aufweist, durch den die jeweiligen Nietelemente (1), ggf. angetrieben von einer Fluidströmung, vorschiebbar sind, wobei der Nietkanal (3) einen Eingangsabschnitt (3a) und einen Ausgangsabschnitt (3b) aufweist, wobei die Nietsteuereinheit (2) eine Steuerwelle (5) aufweist, die zumindest einen Teil des Nietkanals (3) in einem Steuerbereich (6) zwischen dem Eingangsabschnitt (3a) und dem Ausgangsabschnitt (3b) durchdringt und wobei die Anordnung so getroffen ist, dass durch ein Verschwenken der Steuerwelle (5) der Durchtritt von Nietelementen (1) und/oder Fluid durch den Steuerbereich (6) hindurch steuerbar ist,
**dadurch gekennzeichnet,**
**dass** mindestens zwei nebeneinander angeordnete Nietsteuereinheiten (2) vorgesehen sind, dass eine gemeinsame Steuerwelle (21) vorgesehen ist und dass die Steuerwellen (5) der Nietsteuereinheiten (2) jeweils durch einen axialen Abschnitt der gemeinsamen Steuerwelle (21) bereitgestellt sind.

2. Nietsteuerung nach Anspruch 1, **dadurch gekennzeichnet, dass** die Steuerwellenachse (5a) im Wesentlichen quer zu der Nietkanal-Längsachse (7) im Eingangsabschnitt (3a) und/oder im Ausgangsabschnitt (3b) ausgerichtet ist, vorzugsweise, dass die Steuerwelle (5) den vollen Querschnitt des Nietkanals (3) durchdringt.

3. Nietsteuerung nach Anspruch 1 oder 2, **dadurch gekennzeichnet, dass** die Steuerwelle (5) in einer Durchlaßstellung einen für Nietelemente (1) und Fluid offenen Verbindungsabschnitt (8) zwischen dem Eingangsabschnitt (3a) und dem Ausgangsabschnitt (3b) bereitstellt und dass die Steuerwelle (5) in einer Sperrstellung den Durchtritt von Nietelementen (1) und/oder von Fluid zwischen dem Eingangsabschnitt (3a) und dem Ausgangsabschnitt (3b) im Wesentlichen sperrt.

4. Nietsteuerung nach Anspruch 3, **dadurch gekennzeichnet, dass** die Steuerwelle (5) eine Nietkanal-Durchgangsbohrung (9) aufweist, die je nach Stellung der Steuerwelle (5) einen Verbindungsabschnitt (8) zwischen dem Eingangsabschnitt (3a) und dem Ausgangsabschnitt (3b) des Nietkanals (3) bereitstellt oder den Durchtritt von Nietelementen (1) und/oder von Fluid zwischen den Eingangsabschnitt (3a) und dem Ausgangsabschnitt (3b) im Wesentlichen sperrt.

5. Nietsteuerung nach einem der vorhergehenden Ansprüche, **dadurch gekennzeichnet, dass** die Nietsteuereinheit (2) eine Übergabe-Fördereinrichtung (10) zum Fördern eines Nietelements (1) vom Eingangsabschnitt (3a) in den Ausgangsabschnitt (3b) hinein mittels einer Übergabe-Fluidströmung (11) aufweist, vorzugsweise, dass die Übergabe-Fördereinrichtung (10) mindestens einen Fluidkanal (12) aufweist, der mit dem Nietkanal (3), insbesondere im Eingangsabschnitt (3a), kommuniziert und über den eine Übergabe-Fluidströmung (11) erzeugbar ist.

6. Nietsteuerung nach Anspruch 5, **dadurch gekennzeichnet, dass** die Übergabe-Fördereinrichtung (10) im Bereich der Steuerwelle (5) mindestens eine Entlüftungsöffnung (14) aufweist, über die ein Teil der Übergabe-Fluidströmung (11) abströmt, vorzugsweise, dass die Steuerwelle (5) in zumindest eine Austrittsöffnung (9a) der Nietkanal-Durchgangsbohrung (9) mündende Entlüftungsrillen (14) aufweist.

7. Nietsteuerung nach einem der vorhergehenden Ansprüche, **dadurch gekennzeichnet, dass** die Nietsteuereinheit (2) eine Transport-Fördereinrichtung (15) zum Weitertransport eines Nietelements (1) vom Ausgangsabschnitt (3b) zu einer Nietanwendung mittels einer Transport-Fluidströmung (16) aufweist.

8. Nietsteuerung nach Anspruch 7, **dadurch gekennzeichnet, dass** die Transport-Fluidströmung (16) bezogen au f den Querschnitt des Nietkanals (3) im Wesentlichen zentrisch in den Ausgangsabschnitt (3b) des Nietkanals (3) eingeleitet wird.

9. Nietsteuerung nach Anspruch 7 oder 8, **dadurch gekennzeichnet, dass** die Transport-Fördereinrichtung (15) mindestens eine Fluidkanal-Durchgangsbohrung (17) in der Steuerwelle (5) aufweist, die in einer Transportstellung der Steuerwelle (5) mit dem Ausgangsabschnitt (3b) einerseits und mit einer Fluidzufuhr (17a) andererseits kommuniziert, vorzugsweise, dass die Transportstellung der Steuerwelle (5) mit der Sperrstellung der Steuerwelle (5) identisch ist.

10. Nietsteuerung nach einem der vorhergehenden Ansprüche, **dadurch gekennzeichnet, dass** die Steuerwelle (5) in einer Durchlaßstellung einen für Nietelemente (1) offenen Verbindungsabschnitt (8) zwischen dem Eingangsabschnitt (3a) und dem Ausgangsabschnitt (3b) bereitstellt und dass die Steuerwelle (5) in einer Sperrstellung den Durchtritt von Nietelementen (1) zwischen dem Eingangsabschnitt (3a) und dem Ausgangsabschnitt (3b) sperrt und eine bezogen auf den Querschnitt des Nietkanals (3) im Wesentlichen zentrische Einleitung einer Transport-Fluidströmung (16) in den Nietkanal (3), insbesondere in den Ausgangsabschnitt (3b) des Nietkanals (3), erlaubt.

11. Nietsteuerung nach einem der vorhergehenden Ansprüche, **dadurch gekennzeichnet, dass** der gemeinsamen Steuerwelle (21) ein gemeinsamer Aktuator (22) zum motorischen Verschwenken der gemeinsamen Steuerwelle (21) zugeordnet ist.

12. Nietbereitstellungseinrichtung zur Bereitstellung von Nietelementen (1) o. dgl. aus einem Nietspeicher (24) über mindestens einen Nietausgang (25) für mindestens eine Nietanwendung, mit einem Übergabeschlitten (28) mit einer Nietsteuerung nach einem der vorhergehenden Ansprüche, wobei der Nietspeicher (24) mindestens zwei gestapelte, insbesondere austauschbare Nietkassetten (26) mit jeweils mindestens einem Ausgangsflansch (27) o. dgl. zur Abgabe von Nietelementen (1) aufweist, wobei der Übergabeschlitten (28) entlang der Nietkassetten (26) in deren Stapelrichtung (29) verfahrbar ist, so dass eine Nietsteuereinheit (2) der Nietsteuerung auf eine Nietkassette (26) zur Übergabe eines Nietelements (1) von der jeweiligen Nietkassette (26) auf die jeweilige Nietsteuereinheit (2) ausrichtbar ist.

13. Nietbereitstellungseinrichtung nach Anspruch 12, **dadurch gekennzeichnet, dass** jede Nietsteuereinheit (2) einen dem Eingangsabschnitt (3a) des Nietkanals (3) zugeordneten Eingangsflansch (30) für den Empfang von Nietelementen (1) aufweist und dass bei der Übergabe eines Nietelements (1) der nietkassettenseitige Ausgangsflansch (27) und der nietsteuerseitige Eingangsflansch (30) über einen Spalt beabstandet sind, vorzugsweise, dass der Spalt in einem Bereich zwischen etwa 0,2 mm und etwa 0,6 mm liegt, weiter vorzugsweise, dass der Spalt etwa 0,4 mm beträgt.

14. Nietbereitstellungseinrichtung nach Anspruch 12 oder 13, **dadurch gekennzeichnet, dass** die unterschiedlichen Nietkassetten (26) zumindest zum Teil Nietelemente (1) unterschiedlicher Abmessungen speichern und dass der Übergabeschlitten (28) entsprechend mehrere, auf die unterschiedlichen Abmessungen angepasste Nietsteuereinheiten (2) aufweist.

## Claims

1. Rivet control for controlling the motion of rivet elements (1) or the like, in particular for receiving and forwarding rivet elements (1), having at least one rivet control unit (2), wherein the rivet control unit (2) has a rivet channel (3) through which the particular rivet elements (1) can be pushed, possibly driven by a fluid flow, wherein the rivet channel (3) has an inlet section (3a) and an outlet section (3b), wherein the rivet control unit (2) has a control shaft (5), which extends through at least a part of the rivet channel (3) in a control region (6) between the inlet section (3a) and the outlet section (3b), and wherein the arrangement is such that the passage of rivet elements (1) and/or fluid through the control region (6) can be controlled by swivelling the control shaft (5), **characterized**
**in that** at least two adjacently disposed rivet control units (2) are provided, in that a common control shaft (21) is provided, and in that control shafts (5) of rivet control units (2) are each provided by an axial section of common control shaft (21) .

2. Rivet control according to Claim 1, **characterized in that** control shaft axis (5a) is oriented substantially transversely to rivet channel longitudinal axis (7) in inlet section (3a) and/or in outlet section (3b), preferably **in that** the control shaft (5) extends through the entire cross section of the rivet channel (3).

3. Rivet control according to Claim 1 or 2, **characterized in that** control shaft (5), in a pass-through position, provides a connection section (8) between inlet section (3a) and outlet section (3b), which is open for rivet elements (1) and fluid, and **in that** control shaft (5), in a blocking position, substantially blocks the passage of rivet elements (1) and/or fluid between inlet section (3a) and outlet section (3b).

4. Rivet control according to Claim 3, **characterized in that** the control shaft (5) comprises a rivet channel pass-through bore (9) which, depending on the position of the control shaft (5), establishes a connection section (8) between the inlet section (3a) and the outlet section (3b) of the rivet channel (3) or substantially blocks the passage of rivet elements (1) and/or fluid between the inlet section (3a) and the outlet section (3b).

5. Rivet control according to one of the preceding claims, **characterized in that** rivet control unit (2) comprises a transfer conveyance device (10) for conveying a rivet element (1) from inlet section (3a) into outlet section (3b) using a transfer fluid flow (11), preferably **in that** the transfer conveyance device (10) comprises at least one fluid channel (12) which communicates with rivet channel (3), in particular in inlet section (3a), and via which transfer fluid flow (11) can be created.

6. Rivet control according to Claim 5, **characterized in that** the transfer conveyance device (10) comprises at least one ventilation opening (14) in the region of control shaft (5), via which opening a portion of transfer fluid flow (11) flows out, preferably **in that** control shaft (5) comprises ventilation grooves (14) which lead into at least one outlet opening (9a) of rivet channel pass-through bore (9).

7. Rivet control according to one of the preceding claims, **characterized in that** rivet control unit (2) comprises a transport conveyance device (15) for forwarding a rivet element (1) from outlet section (3b) to a rivet application using a transport fluid flow (16).

8. Rivet control according to Claim 7, **characterized in that** transport fluid flow (16) is introduced substantially into the center of outlet section (3b) of rivet channel (3), relative to the cross section of rivet channel (3).

9. Rivet control according to Claim 7 or 8, **characterized in that** transport conveyance device (15) comprises at least one fluid channel pass-through bore (17) in control shaft (5), which communicates with outlet section (3b), on the one hand, and with a fluid supply (17a), on the other hand, when control shaft (5) is in a transport position, preferably **in that** the transport position of control shaft (5) is identical to the blocking position of control shaft (5).

10. Rivet control according to one of the preceding claims, **characterized in that** control shaft (5), in a pass-through position, provides a connection section (8) between inlet section (3a) and outlet section (3b), which is open for rivet elements (1), and **in that** control shaft (5), in a blocking position, blocks the passage of rivet elements (1) between inlet section (3a) and outlet section (3b) and permits a transport fluid flow (16) to be introduced substantially into the center of rivet channel (3), in particular into outlet section (3b) of rivet channel (3), relative to the cross section of rivet channel (3).

11. Rivet control according to one of the preceding claims, **characterized in that** the common control shaft (21) is assigned a common actuator (22) for swivelling common control shaft (21) using a motor.

12. Device for providing rivet elements (1) or the like from a rivet storage unit (24) via at least one rivet outlet (25) for at least one rivet application, having a transfer carriage (28) with a rivet control according to one of the preceding claims, wherein rivet storage unit (24) comprises at least two stacked rivet cartridges (26) which are replaceable, in particular, each of which comprises at least one output flange (27) or the like for dispensing rivet elements (1), wherein the transfer carriage (28) is movable along rivet cartridges (26) in stacking direction (29) thereof, and therefore a rivet control unit (2) of the rivet control can be oriented towards a rivet cartridge (26) to transfer a rivet element (1) from particular rivet cartridge (26) to particular rivet control unit (2).

13. Device for providing rivets according to Claim 12, **characterized in that** each rivet control unit (2) comprises an input flange (30) assigned to input section (3a) of rivet channel (3) to receive rivet elements (1), and **in that** output flange (27) on the rivet cartridge side and input flange (30) on the rivet control side are separated by a gap when a rivet element (1) is transferred, preferably **in that** the gap lies in a range between approximately 0.2 mm and approximately 0.6 mm, further preferably **in that** the gap is approximately 0.4 mm.

14. Device for providing rivets according to Claim 12 or 13, **characterized in that** the different rivet cartridges (26) store rivet elements (1) having different dimensions, at least in part, and **in that** transfer carriage (28) therefore comprises a plurality of rivet control units (2) adapted to the different dimensions.

## Revendications

1. Commande de l'alimentation en rivets pour la commande du mouvement d'éléments de rivet (1) ou analogues, en particulier pour la réception et le transfert d'éléments de rivet (1), avec une unité de commande de rivets (2), dans laquelle l'unité de commande de rivets (2) présente un canal d'alimentation en rivets (3), à travers lequel les éléments de rivet respectifs (1) peuvent progresser, éventuellement entraînés par un courant de fluide, dans laquelle le canal d'alimentation en rivets (3) présente une section d'entrée (3a) et une section de sortie (3b), dans laquelle l'unité de commande de rivets (2) présente un arbre de commande (5), qui traverse au moins une partie du canal d'alimentation en rivets (3) dans une région de commande (6) entre la section d'entrée (3a) et la section de sortie (3b), et dans laquelle l'agencement est conçu de telle manière que le passage d'éléments de rivet (1) et/ou de fluide à travers la région de commande (6) puisse être commandé par un pivotement de l'arbre de commande (5), **caractérisée en ce qu'**il est prévu au moins deux unités de commande de rivets (2) disposées l'une à côté de l'autre, **en ce qu'**il est prévu un arbre de commande commun (21) et **en ce que** les arbres de commande (5) des unités de commande de rivets (2) sont formés respectivement par une section axiale de l'arbre de commande commun (21).

2. Commande d'alimentation en rivets selon la revendication 1, **caractérisée en ce que** l'axe de l'arbre de commande (5a) est orienté essentiellement transversalement à l'axe longitudinal (7) du canal d'alimentation en rivets dans la section d'entrée (3a) et/ou dans la section de sortie (3b), de préférence **en ce que** l'arbre de commande (5) traverse entièrement la section transversale du canal d'alimentation en rivets (3) .

3. Commande d'alimentation en rivets selon la revendication 1 ou 2, **caractérisée en ce que** l'arbre de commande (5) fournit en position de passage une section de liaison (8) ouverte pour des éléments de rivet (1) et du fluide entre la section d'entrée (3a) et la section de sortie (3b), et **en ce que** l'arbre de commande (5) bloque essentiellement dans une position de blocage le passage d'éléments de rivet (1) et/ou de fluide entre la section d'entrée (3a) et la section de sortie (3b).

4. Commande d'alimentation en rivets selon la revendication 3, **caractérisée en ce que** l'arbre de commande (5) présente un alésage de passage du canal d'alimentation en rivets (9), qui selon la position de l'arbre de commande (5) fournit une section de liaison (8) entre la section d'entrée (3a) et la section de sortie (3b) du canal d'alimentation en rivets (3) ou bloque essentiellement le passage d'éléments de rivet (1) et/ou de fluide entre la section d'entrée (3a) et la section de sortie (3b)

5. Commande d'alimentation en rivets selon l'une quelconque des revendications précédentes, **caractérisée en ce que** l'unité de commande de rivets (2) présente un dispositif de transfert et de transport (10) pour le transport d'un élément de rivet (1) de la section d'entrée (3a) à la section de sortie (3b) au moyen d'un courant de fluide de transfert (11), de préférence **en ce que** le dispositif de transfert et de transport (10) présente au moins un canal de fluide (12), qui communique avec le canal d'alimentation en rivets (3), en particulier dans la section d'entrée (3a), et par lequel un courant de fluide de transfert (11) peut être produit.

6. Commande d'alimentation en rivets selon la revendication 5, **caractérisée en ce que** le dispositif de transfert et de transport (10) présente dans la région de l'arbre de commande (5) au moins une ouverture d'aération (14), par laquelle une partie du courant de fluide de transfert (11) s'écoule, de préférence **en ce que** l'arbre de commande (5) présente des rainures d'aération (14) débouchant dans au moins une ouverture de sortie (9a) de l'alésage de passage du canal d'alimentation en rivets (9).

7. Commande d'alimentation en rivets selon l'une quelconque des revendications précédentes, **caractérisée en ce que** l'unité de commande de rivets (2) présente un dispositif de transport d'alimentation (15) pour le transfert d'un élément de rivet (1) de la section de sortie (3b) à une application de rivets au moyen d'un courant de fluide de transport (16).

8. Commande d'alimentation en rivets selon la revendication 7, **caractérisée en ce que** le courant de fluide de transport (16) est introduit essentiellement au centre dans la section de sortie (3b) du canal d'alimentation en rivets (3) par rapport à la section transversale du canal d'alimentation en rivets (3).

9. Commande d'alimentation en rivets selon la revendication 7 ou 8, **caractérisée en ce que** le dispositif de transport d'alimentation (15) présente au moins un alésage de passage de canal de fluide (17) dans l'arbre de commande (5), qui communique dans une position de transport de l'arbre de commande (5) d'une part avec la section de sortie (3b) et d'autre part avec une arrivée de fluide (17a), de préférence **en ce que** la position de transport de l'arbre de commande (5) est identique à la position de blocage de l'arbre de commande (5).

10. Commande d'alimentation en rivets selon l'une quelconque des revendications précédentes, **caractérisée en ce que** l'arbre de commande (5) dans une position de passage fournit une section de liaison (8) ouverte pour des éléments de rivet (1) entre la section d'entrée (3a) et la section de sortie (3b) et **en ce que** l'arbre de commande (5) dans une position de blocage bloque le passage d'éléments de rivet (1) entre la section d'entrée (3a) et la section de sortie (3b) et permet une introduction essentiellement centrée d'un courant de fluide de transport (16) dans le canal d'alimentation en rivets (3), en particulier dans la section de sortie (3b) du canal d'alimentation en rivets (3), par rapport à la section transversale du canal d'alimentation en rivets (3).

11. Commande d'alimentation en rivets selon l'une quelconque des revendications précédentes, **caractérisée en ce qu'**un actionneur commun (22) est associé à l'arbre de commande commun (21) pour le pivotement motorisé de l'arbre de commande commun (21).

12. Dispositif de fourniture de rivets pour la fourniture d'éléments de rivet (1) ou analogues à partir d'une réserve de rivets (24) via au moins une sortie de rivets (25) pour au moins une application de rivets, avec un chariot de transfert (28) muni d'une commande d'alimentation en rivets selon l'une quelconque des revendications précédentes, dans lequel la réserve de rivets (24) présente au moins deux cassettes de rivets empilées (26), en particulier interchangeables, avec chacune au moins une bride de sortie (27) ou analogue pour la délivrance d'éléments de rivet (1), dans lequel le chariot de transfert (28) est déplaçable le long des cassettes de rivets (26) dans leur direction d'empilement (29), de telle manière qu'une unité de commande de rivets (2) de la commande d'alimentation en rivets puisse être dirigée vers une cassette de rivets (26) pour le transfert d'un élément de rivet (1) de la cassette de rivets respective (26) à l'unité de commande de rivets respective (2).

13. Dispositif de fourniture de rivets selon la revendication 12, **caractérisé en ce que** chaque unité de commande de rivets (2) présente une bride d'entrée (30) associée à la section d'entrée (3a) du canal d'alimentation en rivets (3) pour la réception d'éléments de rivet (1) et **en ce que**, lors du transfert d'un élément de rivet (1), la bride de sortie côté cassette de rivets (27) et la bride d'entrée côté commande de rivets (30) sont espacées d'un intervalle, de préférence **en ce que** l'intervalle se situe dans une plage comprise entre environ 0,2 mm et environ 0,6 mm, de préférence encore **en ce que** l'intervalle vaut environ 0,4 mm.

14. Dispositif de fourniture de rivets selon la revendication 12 ou 13, **caractérisé en ce que** les différentes cassettes de rivets (26) contiennent au moins en partie des éléments de rivet (1) de différentes dimensions et **en ce que** le chariot de transfert (28) présente de façon correspondante plusieurs unités de commande de rivets (2) adaptées aux différentes dimensions.
